# EUROPEAN PATENT APPLICATION

(11) **EP 0 949 120 A1**
(43) Date of publication of application: **13.10.1999**
(21) Application number: 99400829.0
(22) Date of filing: 06.04.1999
(51) Int. Cl.: B60R 13/00, B32B 27/08

(54) **Film finishing system with design option**

(30) Priority: 09.04.1998 US 58097
(71) Applicant: Rexam Industries Corp., Charlotte, NC 28247 (US)
(72) Inventor: Ellison, Thomas M., Fort Mill, SC 29715 (US)
(74) Representative: Mouget-Goniot, Claire

(57) **Abstract**

A flexible, weatherable decorative sheet material useful as a surfacing film for automobile parts is provided comprising a base layer (18) of extruded, pigmented, flexibilized polyalkyl methacrylate film and a substantially transparent clear outer layer (14) overlying a first surface of the base layer. The clear outer layer (14) comprises a film formed of a composition selected from the group consisting of urethane polymers, acrylic polymers, fluoropolymers, and alloys of a fluoropolymer and an acrylic polymer. The clear outer layer (14) may be extruded or cast in the form of a coating. The decorative sheet material further includes a color adjustment layer (16) between the base layer (18) and the clear outer layer (14), wherein the color adjustment layer comprises a layer of printing ink that optionally includes pigments, dyes, flakes, and mixtures thereof. The color adjustment layer has a transparency and tint necessary to alter the natural color appearance of the base layer to achieve a desired match to a predetermined automotive color standard. The base layer material may be used to bond the decorative sheet material to Low Pressure Molding Compounds and acrylonitrile-butadiene-styrene terpolymer molding substrates without additional backing layers. The decorative sheet material may include a thermoformable backing layer (22) adhered to a second surface of the base layer and designed to bond the decorative sheet material to thermoplastic molding resins. A method of making the above-described sheet material is also provided.

## Description

### Background of the Invention

To enhance the visual appearance of substrates, including exterior and interior body parts of automobiles, base coat/clear coat paint finishes have become popular. Spray painting is the traditional method of applying the paint finish. However, spray painting of automobile parts is expensive and poses significant pollution concerns. Additionally, spray painting is poorly suited for surfacing plastic substrates that have become increasingly popular in the automobile industry. The need for an alternative to spray applied paint in the automotive industry has been documented in a number of patents. The general approach taken in these patents is to replace spray paint with a multilayer plastic film made from a liquid solvent or dispersion system. The resulting plastic film provides similar visual appearance while reducing the cost and pollution control problems associated with spray painting. Exemplary films and methods of making and applying such films are disclosed in U.S. Patent Nos. 4,810,540; 4,931,324; 4,943,680 and 5,342,666,

Liquid cast pigmented base coats pose problems in maintaining uniform opacity after molding the film into a three-dimensional shape. Relatively thick pigmented layers are required to maintain opacity after molding. However, thick coatings increase the time it takes to remove volatile solvents which, in turn, decreases production speed. Additionally, physical properties of the film decline when the desired opacity is obtained by increased pigment loading. Patent Application Serial No. 08/623,479 teaches melt extrusion coating as a zero solvent approach to clear coat production and coextrusion as an approach to base coat/clear coat production for certain colors. Extrusion of the pigmented layer avoids solvent removal problems, but further improvements are needed.

The desire in the automotive industry is to build assembly plants in which the use of painting facilities is minimized or eliminated. This means that a viable alternative decorative film finish system must exist for each part that requires film surfacing. Further, the trend in the industry is away from large volume production of a few models to small volume production of many models, including very short runs of specialty models. Styling differentiation among the numerous models is also desired. A continuing trend is the use of plastics for weight reduction and parts consolidation.

The material used to form a particular automobile part depends in part on the horizontal or vertical orientation of the automobile part. The dimensional stability through thermal cycles gives Sheet Molding Compounds (SMC) an advantage for horizontal applications. Thermoplastics offer process advantages for vertical panels. Additionally, olefins, such as thermoplastic olefins (TPO), offer cost advantages. Finishing thermoplastics with plastic film is known in the art. Some progress has been made with surfacing SMC materials. For example, U.S. Patent No. 3,676,510 and European Patent Application 0 361 823 A2 disclose processes for surfacing SMC and are herein incorporated by reference.

However, the high pressures, temperatures and viscosities involved with conventional SMC molding processes have prevented commercial success of SMC finishing methods. In the conventional process, the press is charged with a "plug" of SMC that is weighed to fill the mold but only covers a portion of the mold surface. In a fast motion (on the order of seconds) the mold is closed and compressed to about 1000 psi at a temperature over 300EF and held for one to two minutes. Thermoplastic films suitable for finishing exterior automobile parts are either distorted by the process, trap air by the fast closure of the mold or suffer chemical attack from the styrene monomer present in the SMC. New developments in Low Pressure Molding Compounds (LPMC) allow molding at about 300 psi or lower at a temperature of less than 300EF. The lower molding temperature reduces chemical attack from the styrene monomer. Further, these resins can be injected (rather than sheet lay-in) into a mold to push out air and eliminate air entrapment.

There is a need in the art for a film finish system capable of surfacing all automobile parts that require a film finish regardless of the substrate material used to construct the part. Additionally, the film must meet the durability/appearance requirements of the automotive industry. Further, there is a need for a film finishing system that can be adjusted to yield small or large volume production runs as needed with continuous or variable designs.

### Summary of the Invention

The present invention provides a flexible, weatherable decorative sheet material useful in lieu of painting for forming the exterior surface of automobile body parts and methods of making the sheet material. The sheet material meets the durability/appearance requirements of the automobile industry and may be used to surface both thermoplastic substrates as well as LPMC. The method of making the decorative sheet material may be varied to provide small or large quantities and various designs.

In one embodiment, the decorative sheet material comprises a base layer of extruded, pigmented, flexibilized polyalkyl methacrylate film and a substantially transparent clear outer layer overlying a first surface of the base layer. Advantageously, the base layer is a thermoformable shape-sustaining film having a thickness of at least about 1 mil. The clear outer layer comprises a film formed of a composition selected from the group consisting of urethane polymers, acrylic polymers, fluoropolymers, and alloys of a fluoropolymer and an acrylic polymer. Preferably, the clear outer layer comprises an extruded film having a thickness of about 0.5 to about 3.0 mils. In another embodiment, the decorative sheet material includes a color adjustment layer between the base layer and the clear outer layer. The color adjustment layer comprises a layer of printing ink. In a further embodiment, the decorative sheet material includes an extensible mask layer overlying the clear outer layer and releasably affixed thereto. Advantageously, the extensible mask layer is selected from the group consisting of oriented polypropylene, polypropylene, polyethylene, polyurethane, polyethylene terephthalate glycol copolyester (PETG copolyester), and mixtures thereof. In another embodiment, the decorative sheet material includes a thermoformable backing layer overlying a second surface of the base layer. The thermoformable backing layer is selected from the group consisting of thermoplastic olefin, acrylonitrile-butadiene-styrene terpolymer, polypropylene, nylon, PETG copolyester, and mixtures thereof. Depending on the thermoformable backing layer used, the decorative sheet material may further comprise an adhesive layer that affixes the base layer to the thermoformable backing layer. The adhesive layer is selected from the group consisting of urethane adhesives, acrylic pressure sensitive adhesives, acrylic pressure sensitive adhesives with cross-linkers and mixtures thereof.

In another embodiment, the present invention provides a flexible, weatherable, decorative sheet material that includes a thermoformable base layer of an extruded pigmented opaque flexibilized polyalkyl methacrylate film of a thickness from about 1 to about 6 mils and having a predetermined overall uniform color. The decorative sheet material further includes a color adjustment layer overlying a first surface of the base layer. The color adjustment layer is a printing ink composition containing at least one component selected from the group consisting of pigments, dyes, flakes, and mixtures thereof. The color adjustment layer has a thickness from about 0.1 to about 1 mils and has a transparency and tint necessary to alter the natural color appearance of the base layer to achieve a desired match to a predetermined automotive color standard. The sheet material also includes a substantially transparent clear outer layer of a composition selected from the group consisting of urethane polymers, acrylic polymers, fluoropolymers, and alloys of a fluoropolymer and an acrylic polymer overlying the color adjustment layer. Preferably, the sheet material exhibits a distinctness-of-image (DOI) of at least 65.

The present invention further provides a composite shaped structure having a decorative outer finish and useful as an exterior automobile body part. The structure comprises a molded polymer substrate, a base layer of extruded pigmented, flexibilized polyalkyl methacrylate film having one surface bonded to the polymer substrate, and a substantially transparent clear outer layer overlying the opposite surface of the base layer and comprising a film formed of a composition selected from the group consisting of urethane polymers, acrylic polymers, fluoropolymers and alloys of a fluoropolymer and an acrylic polymer. In a further embodiment, the composite shaped structure includes a thermoformable backing layer overlying the polymer substrate and adhered thereto. The base layer is adhered to the opposite surface of the thermoformable backing layer. Preferably, the polymer substrate is selected from the group consisting of polyvinyl chloride, polycarbonate, polystyrene, acrylonitrile-butadiene-styrene (ABS) terpolymer, polypropylene, polyethylene, thermoplastic olefin, styrene-polyphenylene oxide, acrylonitrile-butadiene-styrene/polycarbonate, polybutylene terephthalate, polybutylene terephthalate/polycarbonate, PETG copolyester, nylon, RIM urethanes.

Additionally, the present invention provides a method of making a flexible weatherable decorative sheet material useful in lieu of painting for forming the exterior surface of automobile body parts. The method includes providing a base layer of an extruded pigmented flexibilized polyalkyl methacrylate film and forming on a first surface of the base layer a substantially transparent clear outer layer comprising a film formed of a composition selected from the group consisting of urethane polymers, acrylic polymers, fluoropolymers, and alloys of a fluoropolymer and an acrylic polymer. Advantageously, the method further includes laminating an extensible mask layer to the exposed surface of the clear outer layer. Preferably, the clear outer layer is formed by extruding a thin film of the composition onto the base layer material. In one embodiment, the method further includes applying a thermoformable backing layer to a second surface of the base layer. Advantageously, the thermoformable backing layer is applied by coating an adhesive onto a second surface of the base layer and laminating a thermoformable backing layer to the adhesive coated surface of the base layer. In another embodiment, the thermoformable backing layer is applied by extruding the backing layer onto a second surface of the base layer. Preferably, the method further includes the step of applying a color adjustment coating to the base layer prior to forming the substantially transparent clear outer layer. Advantageously, the application of the color adjustment coating comprises printing an ink composition containing one or more components selected from the group consisting of pigments, dyes and flakes onto a first surface of the base layer. Alternatively, the color adjustment coating may be applied by printing a design onto a first surface of the base layer. Preferably, the design is printed using a printing technique selected from the group consisting of gravure, rotary screen, flat bed step-and-repeat screen, ink jet, and flexographic techniques. The color adjustment layer is formed between the base layer and the clear outer layer.

Preferably, the base layer has a thickness from about 1 to about 6 mils and a predetermined overall uniform color. The color adjustment layer has a preferable thickness of from about 0.1 to about 1 mils and has a transparency and tint necessary to alter the natural color appearance of the base layer in order to achieve a desired match to a predetermined automobile color standard.

### Brief Description of the Drawings

Having thus described the invention in general terms, reference will now be made to the accompanying drawings, which are not necessarily drawn to scale, and wherein:
Figure 1 is a cross sectional view of the decorative sheet material of the present invention;
Figure 2 is a cross sectional view of a composite shaped structure comprising the decorative sheet material of the present invention bonded to the exterior surface of a substrate constructed of Low Pressure Molding Compound (LPMC);
Figure 3 is a cross sectional view of a composite shaped structure comprising the decorative sheet material of the present invention bonded to the exterior surface of a substrate constructed of acrylonitrile-butadiene-styrene (ABS) terpolymer;
Figure 4A is a schematic view illustrating one embodiment of the method of making the visible layers of the decorative sheet material of the present invention and applying a mask layer thereto;
Figure 4B is a schematic view illustrating another embodiment of the method of making the visible surface layers of the decorative sheet material of the present invention and applying a mask layer thereto;
Figure 4C is a schematic view illustrating a further embodiment of the method of making the visible surface layers of the decorative sheet material of the present invention and applying a mask layer thereto;
Figure 5 is a schematic view of a method of adhering a thermoplastic sheet to the exposed surface of the base layer to form a backing layer for the decorative sheet material of the present invention; and
Figure 6 is a schematic view illustrating the extrusion of ABS terpolymer onto the exposed surface of the base layer to form a backing layer for the decorative sheet material of the present invention.

### Detailed Description of the Invention

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

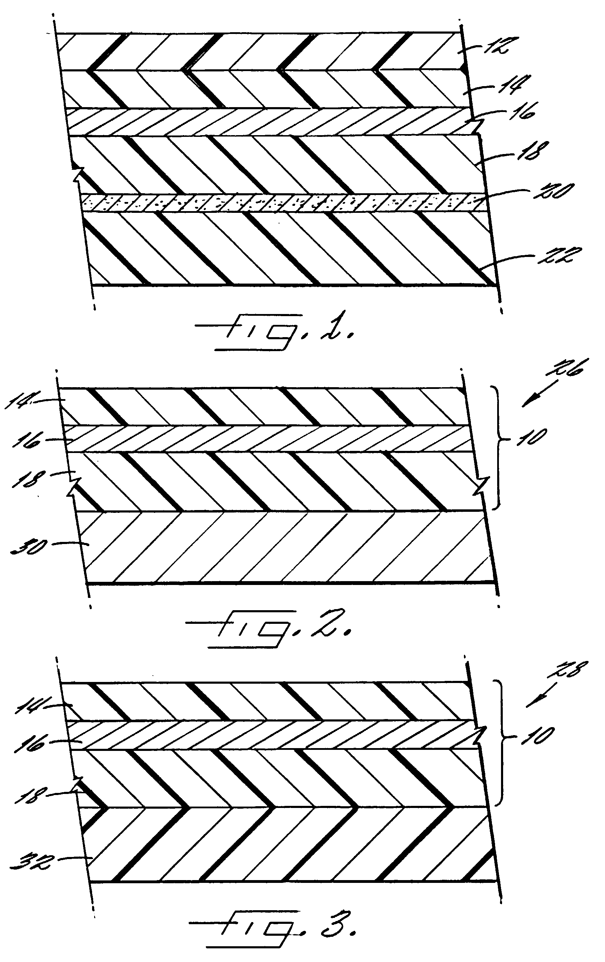

Figure 1 illustrates one embodiment of the decorative sheet material **10** of the present invention. In this embodiment, the decorative sheet material **10** contains the following layers: an extensible mask layer **12**, a substantially transparent clear outer layer **14**, a color adjustment layer **16**, a base layer **18**, an adhesive layer **20**, and a backing layer **22**.

The extensible mask layer **12** is an optional layer designed to maintain gloss and DOI during a thermoforming or vacuum forming process. The mask layer **12** overlies and protects the clear outer layer **14**. If retained after the molding process, the mask layer **12** also protects the visible surface layers of the decorative sheet material **10** from scratching or other injury until the part is ready for display.

Additionally, the extensible mask layer **12** maintains high gloss and DOI during compression molding, such as thermoplastic or thermoset compression molding, where the mold is roughened or deglossed. Roughened molds are less expensive than highly polished molds and are also functionally superior to highly polished molds because the rough mold surface enhances air removal from the mold as the mold closes. Thus, use of an extensible mask layer **12** is a preferable method of retaining high gloss in the visible surface layers of the decorative sheet material **10**.

Preferably, the extensible mask layer **12** is about 0.5 to about 3 mils in thickness. Most preferably, the extensible mask layer **12** is about 2 mils in thickness. Advantageously, the extensible mask layer **12** is selected from the group consisting of oriented polypropylene, polypropylene, polyethylene, polyurethane, PETG copolyester, or mixtures thereof. Optionally, a corona treatment of the mask layer **12** may be used to improve the bond between the clear outer layer **14** and the mask layer.

Some of the above listed polymers are sold in grades that contain particulate material such as clay to slightly roughen the surface for improved film winding and handling. However, such additives increase surface haze and reduce distinctness of image (DOI) of decorative sheet materials. Therefore, it is desirable to use a grade of polymer having no slip additives to prevent haze and low DOI values in the resulting decorative sheet material.

In another embodiment, the extensible mask layer **12** could be a coextruded multi-layer structure in which one surface layer is designed specifically to optimize the gloss and DOI of the paint surface and to release from the paint surface and the other coextruded surface layer is designed for formability and roll formation, with appropriate slip additives. The layers could be of the same or of different polymers.

The clear outer layer **14** is a substantially transparent, durable, weatherable coating that protects the underlying pigmented layer or layers and imparts a high gloss and DOI to the visible surface layers of the decorative sheet material **10**. The clear outer layer **14** is applied to an exposed surface of the base layer **18**. The clear outer layer **14** may be cast upon the base layer **18** in the form of a coating solution or extruded onto the surface of the base layer. The choice of manufacturing method for the clear outer layer **14** depends, in part, upon the quantity of the decorative sheet material **10** desired. Generally, a cast clear outer layer **14** is more efficient for short run setups. However, for larger production runs, an extruded clear outer layer **14** is desirable due to faster production speed.

The clear outer layer **14** is formed from a weatherable polymer composition selected to provide a film which will not significantly fade, peel, crack or chalk when exposed to the environment for the intended life of the substrate. Additionally, the clear outer layer **14** must be formable from a two-dimensional surface to a three-dimensional surface without objectionable loss of appearance properties. Advantageously, the clear outer layer **14** is selected from the group consisting of urethane polymers, acrylic polymers, fluoropolymers, and alloys of a fluoropolymer and an acrylic polymer, such as FLUOREX7 copolymer manufactured by Rexam. The clear outer layer **14** may include UV screeners to increase weatherability, antioxidants, heat stabilizers and other conventional additives. Preferably, the clear outer layer **14** is from about 0.5 to about 3 mils in thickness. Most preferably, the clear outer layer **14** is about 2 mils in thickness. Although referred to as substantially transparent, the clear outer layer **14** may contain tinting pigments, dyes, and/or flakes to enhance visual appearance and improve weatherability.

The color adjustment layer **16** is an optional layer designed to adjust the appearance of the underlying base layer **18**. The color adjustment layer **16** alters the natural color appearance of the base layer **18** to achieve a desired match to a predetermined automotive color standard. The color adjustment layer **16** advantageously contains pigments, dyes and/or flakes, such as metallic flakes, and may be a continuous color coating or in the form of a noncontinuous pattern or design. Preferably, the color adjustment layer **16** comprises a solvent or water based ink wherein the ink chemistry is designed to bond to the base layer **18** and to the clear outer layer **14**. Solvent or water based acrylic inks are preferred. Preferably, the color adjustment layer **16** is from about 0.1 to about 1 mils in thickness. Most preferably, the color adjustment layer **16** is about 0.2 mils in thickness.

The color adjustment layer **16** is applied to the base layer **18** as a continuous sheet by conventional coating techniques, such as reverse roll coating or slot die, or applied in a design pattern by printing methods such as gravure, rotary screen, flat bed step-and-repeat screen, ink jet, flexographic or other printing techniques. The print pattern of the color adjustment layer **16** may be applied with a continuous pattern or several patterns may be printed in one roll by step-and-repeat methods or computer controlled ink jet methods. Once printed, the base layer **18** can be processed roll-to-roll for application of the clear outer layer **14** and optional sublayers.

Base layer **18** is an extruded, pigmented, flexibilized polyalkyl methacrylate film, such as a polymethyl methacrylate (PMMA) film or a polyethyl methacrylate (PEMA) film. The base layer **18** provides opacity behind the clear outer layer **14** and optional color adjustment layer **16**. The base layer **18** is capable of being processed in roll-to-roll form and can be handled when coated either in roll form or die cut part form for placement in a mold. Additionally, the base layer **18** must be capable of conforming to a three dimensional mold surface when heated above about 100E F.

A preferred material for the base layer **18** is KORAD7 A acrylic multipolymer produced by Polymer Extruded Products. KORAD7 A is a commercially available internally pigmented acrylic multipolymer available in certain standard colors, such as white, black, red, etc. KORAD7 A acrylic multipolymer is moderately weatherable and is used for intermediate term (3 to 5 year) exterior applications. However, the gloss retention of KORAD7 A acrylic multipolymer under external aging conditions is not sufficient to meet automotive exterior clear coat requirements.

KORAD7 A acrylic multipolymer is typically extruded in 2 and 3 mil thickness. Four to 6 mil thicknesses are possible. Preferably, the base layer **18** has a thickness from about 1 to about 6 mils. Most preferably, the base layer **18** has a thickness of about 3 mils. In certain applications, it is desirable to use a relatively thick (>3 mil) layer of base layer **18** to mask roughness from filler in the molding resin. Alternatively, extruded PMMA modified with impact modifiers such as Perspec CP 1000I produced by ICI Company could be used as the base layer **18**. Another alternative acrylic multipolymer composition for the base layer **18** is a PMMA modified with Rohm & Haas Plexiglas DR.

An advantage of this invention is the ability to cost effectively extrude an opacifying color in sufficient thickness to retain opacity after forming into complex shapes. This is difficult in liquid film casting. As cast film thickness increases, solvent removal becomes more difficult and line speeds decrease. Alternatively, physical properties are degraded if opacity is achieved with high pigment loading and certain colors, metallic colors in particular, require low pigment loading and transparency to achieve the desired metallic luster. Extruded base layer **18** as an opacifying pigment layer has a cost advantage over liquid cast base coatings in the 1 to 2 mil range and even more advantage at greater thickness. Solvent removal for liquid cast films above 2 mils is cost prohibitive.

Another advantage of the present invention is the cost effective and low solvent emission method of matching predetermined automobile color standards. The present invention allows purchase of a commercially available base layer **18** having internal pigmentation of a color that is similar to the desired color and adjusting the color and appearance of the base layer with a relatively thin color adjustment layer **16**. In this manner, the resulting film meets required color standards without substantial use of volatile solvents that lead to pollution control problems. In fact, if the clear outer layer **14** is extruded onto the base layer **18**, the only source of volatile emissions is the ink used in the optional color adjustment layer **16**.

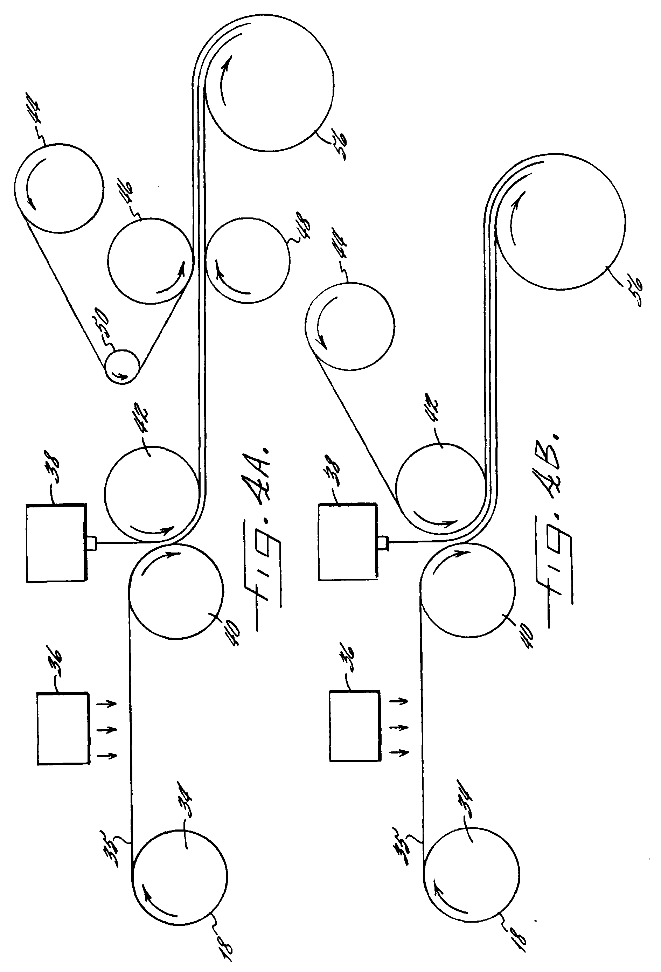

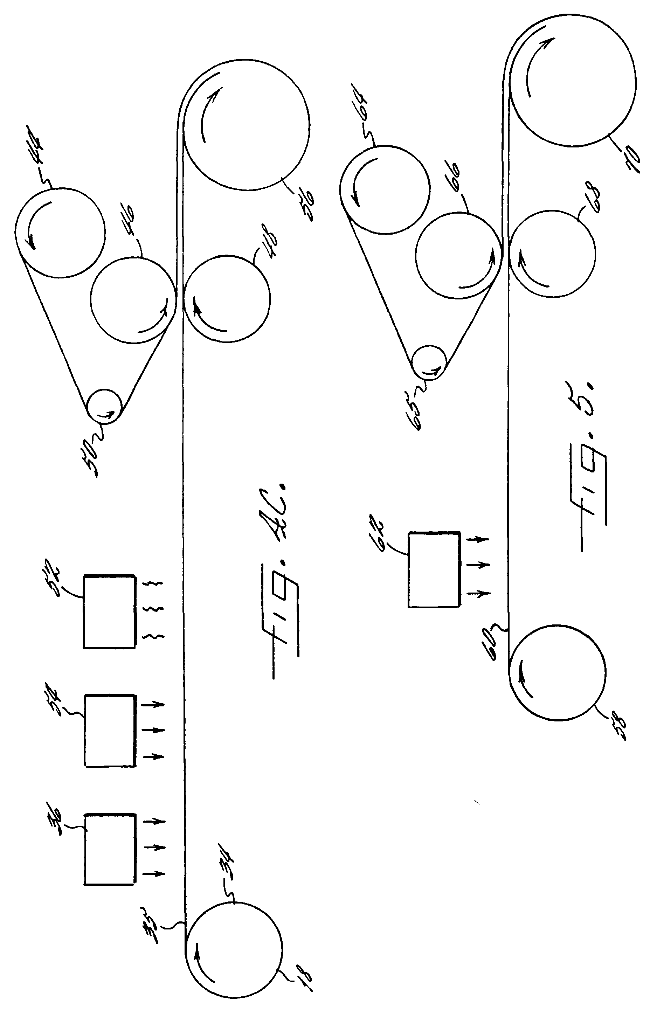

Another advantage of the present invention is the possibility of using base layer 18 as a bond layer in certain applications. KORAD7 A acrylic multipolymer is capable of bonding directly to LPMC in a molding process without the additional cost of a backing layer. As shown in Figure 2, a composite shaped structure **26** is constructed having the decorative sheet material **10** of the present invention bonded directly to a LPMC substrate **30**. Additionally, KORAD7 A acrylic multipolymer is capable of forming an extrusion bond to ABS terpolymer, which is used to form some exterior automobile body parts such as side mirror covers. Thus, as illustrated in Figure 3, a composite shaped structure **28** is constructed of an ABS terpolymer substrate **32** surfaced with the visible layers of the decorative sheet material **10** of the present invention without additional backing layers and then thermoformed into the desired shape. Alternatively, the base layer **18** may be laminated to a backing layer as described below.

Adhesive layer **20** can be any solvent, water based, hot melt, or extruded adhesive that will bond base layer **18** to backing layer **22**. Adhesive layer **20** is omitted if the backing layer **22** is ABS terpolymer extrusion bonded to base layer **18**. Adhesive layer **20** may be selected from the group consisting of urethane adhesives, acrylic pressure sensitive adhesives, acrylic pressure sensitive adhesives with cross linkers and mixtures thereof. A preferred adhesive is NC 222 moisture cured urethane adhesive produced by ICI Company.

Backing layer **22** bonds the visible surface layers of the decorative sheet material **10** to the structural molding resin substrate. In addition, it can provide bulk and/or rigidity for handling as a thermoformed preform. Backing layer **22** also provides thickness to mask glass fibers, fillers or other sources of visual roughening or "orange peel" in the finished surface. Backing layer **22** is selected to provide a melt bond with thermoplastic molding resins or a chemical bond with LPMC. If LPMC is being surfaced, the base layer **18** of KORAD7 A acrylic multipolymer may be bonded directly to LPMC without the need for a separate backing layer **22**. Alternatively, the backing layer **22** may be constructed of ABS terpolymer which also bonds to LPMC. If a thermoplastic molding resin is being surfaced, backing layer **22** may be selected from the group consisting of thermoplastic olefin (TPO), polypropylene (PP), nylon, PETG copolyester and mixtures thereof. In this manner, a common decorative surface consisting of visible layers **14**, **16** and **18** can surface a variety of desired molding substrates. For example, an automobile body can be designed to use LPMC for the horizontal body panels, thermoplastic polyester (e.g. polybutyl terephthalate) for door and body panels, and PP or TPO for the front and rear facias, with all surface areas finished with the same finishing material.

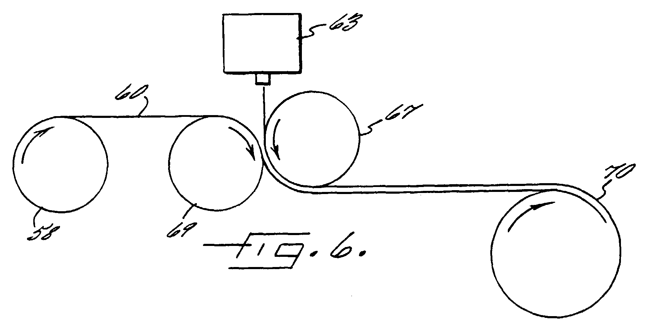

Figure 4A illustrates a process for extruding the clear outer layer **14** onto the base layer **18** and applying the extensible mask layer **12** to the exposed surface of the clear outer layer **14**. The base layer **18** is advanced from a base layer supply roll **34** through a series of process steps. If desired, the base layer **18** is advanced through a color adjustment station **36** wherein the color adjustment layer **16** is applied to the exposed surface **35** of the base layer. As indicated above, the color adjustment station **36** may comprise any conventional coating technique, such as reverse roll coating or spray coating, or a printing technique such as gravure, rotary screen, flat bed step-and-repeat screen, ink jet, flexographic or other printing technique. The base layer **18** then advances to an extruder **38** where the clear outer layer **14** is extrusion coated onto the exposed surface **35** of the base layer. The coated base layer **18** is then pressed between a first rotating roll **40** and a second rotating roll **42.**

The thickness of the clear outer layer **14** applied to the base layer **18** is dependent upon many variables including the polymer melt properties, various extruder parameters, such as die gap opening and pump speed, and the line speed and tension of the base layer **18.** The thickness of the clear outer layer **14** may be adjusted as desired depending on the particular application of the decorative sheet material **10.**

The extruder **38** is preferably a conventional screw extruder. The clear outer layer composition is fed to the extruder **38** in the form of pellets or granules which are heated to a molten state and subsequently expelled through a suitable film die. The die may consist of a single slot opening designed to produce a single clear outer layer **14** or it may a be a co-extrusion die designed to receive multiple molten polymer streams to form a multi-layer co-extruded clear outer layer. The extrusion process disclosed in Patent Application Serial No. 08/623,479 is suitable for use with the present invention.

As illustrated in Figure 4A, after application of the clear outer layer **14**, an extensible mask layer **12** may be applied. The extensible mask layer **12** is advanced from the mask layer supply roll **44** past a guide roll **50** and is laminated onto the exposed surface of the clear outer layer **14** by compressing the two films together between a first laminated roll **46** and a second laminating roll **48**. The resulting film is wound around product roll **56**.

Alternatively, the process illustrated by Figure 4A may be altered as shown in Figure 4B wherein the extensible mask layer **12** advances from the mask layer supply roll **44** and passes between the first rotating roll **40** and second rotating roll **42**. In this embodiment, the clear outer layer is extruded onto the exposed surface **35** of the base layer and compressed between the exposed surface of the base layer and the extensible mask layer **12** in a single operation. The resulting film is collected on product roll **56**.

In a third embodiment, the clear outer layer **14** is applied to the exposed surface **35** of the base layer **18** by using a coating solution containing volatile solvents. In this embodiment, the base layer **18** is advanced from the base layer supply roll **34** through the color adjustment station **36** where color adjustment layer **16** is applied to the exposed surface **35** of the base layer. The exposed surface **35** of the base layer **18** is then advanced past a coating station **54** where the clear outer layer is coated onto the exposed surface **35** using any conventional coating technique, such as reverse roll coating or spray coating. The coated film then advances through a dryer **52** to evaporate the volatile solvents in the clear outer layer coating. Following the coating operation, an extensible mask layer **12** may then be applied in the same manner as described above.

Figure 5 illustrates the application of a thermoformable backing layer **22** to the exposed surface **60** of the base layer **18**. As illustrated in Figure 5, the base layer/clear outer layer composite film is advanced from supply roll **58** through an adhesive coating station **62** wherein adhesive layer **20** is applied to the exposed surface **60** of the base layer **18**. After the adhesive coating is applied, the base layer **18** is advanced between a first laminating roll **66** and a second laminating roll **68** which laminate a thermoformable backing layer **22** onto the adhesive-coated base layer **18**. The backing layer is advanced from a backing layer supply roll **64** past a guide roll **65** and between the laminating rolls **66** and **68**. The resulting film is collected on product roll **70**. Optionally, a corona treatment (not shown) of the backing layer **22** may be used to improve the bond between certain olefin backing layer materials and base layer **18**.

If ABS terpolymer is used as the backing layer material, the thermoformable backing layer **22** may be applied by using the method shown in Figure 6. As illustrated in Figure 6, the base layer/clear outer layer film is advanced from supply roll **58** and between rotating rolls **67** and **69**. An extruder **63** extrudes ABS terpolymer material onto the exposed surface **60** of the base layer **18**. Rotating rolls **67** and **69** press the base layer **18** and extruded ABS backing layer together and an extrusion bond is formed between the ABS and the base layer **18**. The resulting film is collected on product roll **70**.

The decorative sheet material **10** of the present invention can be adhered to a supporting substrate in accordance with known laminating or bonding techniques. Illustrative examples of supporting substrates include metal, wood, and molded polymer substrates. As explained above, particularly suitable shaped articles for the present invention are exterior automobile body parts such as body panels and bumpers.

In an "in-mold" surfacing process, the forming of the sheet material into a three-dimensional configuration is achieved by placing the flat (two-dimensional) decorative sheet material in the mold and causing the sheet to be formed into a three-dimensional configuration while in the mold, either through the action of the injected plastic material alone, or with the assistance of vacuum, pressure, movable mold cores, or a combination of these. In an "insert molding" operation, the sheet material is heated and preformed with vacuum and/or pressure into a three-dimensional insert, and this preformed insert is then placed in the mold.

The decorative sheet material **10** can be bonded to molded polymer substrates by placing the film into a mold having a contoured, three-dimensional molding surface. A moldable polymer is then introduced into the mold on one side of the decorative sheet material **10**. The decorative sheet material **10** is then molded into a contoured three-dimensional configuration conforming to the molding surface of the mold, while molding the polymer to form a shaped article with the composite decorative sheet material adhered to the outer surface thereof. Depending on the desired polymer substrate to be surfaced, the composite decorative sheet material **10** may include a backing layer **22**, as described above, wherein the composite decorative sheet material is placed into the mold with the backing layer oriented inwardly away from the molding surface so as to become adhered to the polymer substrate.

Suitable polymers for the molded polymer substrate include, for example, polyvinyl chloride, polycarbonate, polystyrene, acrylonitrile-butadiene-styrene, polyethylene, polypropylene, thermoplastic olefin, styrene/polyphenylene oxide (NORYEL), acrylonitrile-butadiene-styrene/polycarbonate, polybutylene terephthalate, polybutylene terephthalate/polycarbonate, PETG copolyester, nylon, and RIM urethanes. Polyolefin homopolymers and copolymers (ionomers, etc.) are inexpensive thermoplastic resins which have excellent molding properties and are particularly preferred for practicing the present invention. Polypropylene, for example, when glass filled and foamed with a blowing agent, has performance properties suitable for structural or engineering uses. Acid copolymers of polyethylene, such as DuPont's SURLYN7 polymer, are similar in performance and in addition have exceptional toughness.

The present invention and many of its features and advantages are illustrated in the following examples:

### EXAMPLES

| **Clear Outer Layer Formulas** (in parts by weight) | | |
|---|---|---|
| **Material** (Supplier) | **Formula Nos.** | |
| | **Formula 1** | **Formula 2** |
| KYNAR 740 (Elf Atochem) | 58.35 | 65.25 |
| CP-41 (ICI) | 39.90 | |
| CP-51 (ICI) | | 32.00 |
| TINUVIN T 900 (Ciba Geigy) | 1.75 | 1.75 |
| TINUVIN 327 (Ciba Geigy) | 0.25 | 0.25 |
| TINUVIN 622 (Ciba Geigy) | 0.25 | 0.25 |
| IRGONOX 1010 (Ciba Geigy) | 0.25 | 0.25 |
| IRGAFOS 168 (Ciba Geigy) | 0.25 | 0.25 |

### Example 1

A clear coat made using Formula 1 above was extrusion coated onto a 3 mil thick sheet of black KORAD7 A acrylic multipolymer to yield a glossy base coat/clear coat film. The extruder set up conditions were:
- Screw:: 2" diameter, 68 3" length
- Extruder Barrel Zone Temps. (EF):: 350-450-450-450
- Adapter Temperature:: 480EF
- Connector Temperature:: 480EF
- Die Temperature:: 480EF
- Line speed:: 90 to 110 fpm
- Die width:: 14"

### Example 2

Two sets of samples were made comprising a clear coat made using Formula 1 above nipped to KORAD7 A acrylic multipolymer at 360EF to simulate extrusion coating. The first set of samples consisted of a Formula 1 clear coat bonded to a 3 mil thick sheet of white KORAD7 A. The second set of samples consisted of a Formula 1 clear coat bonded to a 2 mil thick sheet of marble printed clear KORAD7 A acrylic multipolymer.

One set of samples was molded without preforming to form 3" diameter hemisphere shapes. The TPO molding resin used for convenience did not form a permanent bond to the KORAD7 A acrylic multipolymer layer. The part shape prevented instrumental gloss or DOI reading but visually the surface had a glossy "wet look" and high DOI. DOI was judged by observing the reflected image of ceiling light grills.

A second set of samples was laminated to 6 mil thick TPO film using a moisture cure urethane NC222 adhesive manufactured by ICI. The subsequent films were molded into 4" x 6" x 23" deep flat top pyramid shapes. TPO was used as the molding resin and good bonds were achieved.

### Example 3

A white, 3 mil thick sheet of KORAD7 A acrylic multipolymer was extrusion coated with a Formula 1 above clear coat. The extruder set up conditions were:
- Extruder Barrel Zone Temps.(EF):: 426-436-471-479-486-494
- Adapter Temperatures(EF):: 480-480
- Die Temperatures(EF):: 490-510-470-470-510-490
- Screw RPM:: 65
- Screw Motor Amps:: 320
- Line Speed:: 75 fpm
- Clear Coat Thickness:: 1.5 mil

Samples from this trial were laminated to 6 mil thick TPO with NC222 adhesive and molded into 4" x 6" x 23" deep flat top pyramid shapes. One sample was exposed to 48 hrs. at 195EF followed by 4 hrs. in boiling water without evidence of delamination.

### Example 4

A sample of black KORAD7 A acrylic multipolymer was surface printed by gravure with a silver acrylic ink in a linear check pattern. The printed film was nipped to extruded clear coat made with Formula 2 above. This base coat/clear coat construction was intern nipped at about 375EF to 17 mil thick ABS which had previously been coated with ELVACITE 2009 acrylic adhesive manufactured by ICI. The laminated construction was then thermoformed into the shape of an exterior car mirror cover and a toy car. The toy car had dimensions of 5" x 12¹/₅" x 32" deep. Gloss and DOI were excellent. The DOI, as estimated by Landolt rings, was > >70.

### Example 5

A Formula 1 above clear coat releasably affixed to a layer of oriented polypropylene (OPP) was extruded onto 3 mil thick white KORAD7 A acrylic multipolymer. A piece of fiberglass cloth was placed over a portion of the OPP. The resulting film was bonded to LPMC supplied by International Composites in a platen press at about 250EF for two minutes and 8 tons ram pressure. The 4"x4" sample was bonded between sheets of aluminum foil. After molding, the OPP was easily removed to yield a glossy surface. The texture of the fiberglass cloth was molded into the surface of the molded piece in the area where the fabric had been placed.

### Example 6

A Formula 2 above clear coat was extruded and nipped between corona treated OPP (Toray grade 510) and 3 mil thick white KORAD7 A acrylic multipolymer. The corona treatment was conducted at 44 dynes. The OPP bond to the extruded clear coat was tight but peelable. The extrusion conditions were:
- Extruder Barrel Zone Temps. (EF):: 400-480-500-500-500-500
- Adapter Temperatures (EF):: 500-500
- Die Temperatures (EF):: 500-500-500-500-500-500
- Screw RPM:: 70
- Drive Motor Amps:: 320
- Line Speed (fpm):: 130
- Clear Coat Thickness:: 2 mils

In one sample using untreated OPP, the bond between the OPP and the extruded clear coat was spotty with air entrapped in areas between the two layers.

### Example 7

The laminate from Example 6 was molded to LPMC as described in Example 5. The molded panel measured 9" x 15". The LPMC charge was about 6" x 9" and spread under the molding conditions to cover the entire panel surface. After molding, the OPP released easily to yield a glossy, wet-look surface. Wrinkles and defects imparted by the aluminum foil prevented instrument measurement of the gloss and DOI.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A flexible, weatherable decorative sheet material useful in lieu of painting for forming the exterior surface of automobile body parts, comprising:
a base layer (18) having a first surface and a second surface and comprising an extruded pigmented flexibilized polyalkyl methacrylate film; and
a substantially transparent clear outer layer (14) overlying said first surface of said base layer, said clear outer layer comprising a film formed of a composition selected from the group consisting of urethane polymers, acrylic polymers, fluoropolymers, and alloys of a fluoropolymer and an acrylic polymer.

2. A sheet material according to Claim 1, wherein said base layer comprises a thermoformable shape sustaining film having a thickness of at least about 1 mil.

3. A sheet material according to Claim 1, further comprising a color adjustment layer (16) between said first surface of said base layer and said clear outer layer.

4. A sheet material according to Claim 3, wherein said color adjustment layer comprises a layer of printing ink.

5. A sheet material according to Claim 1, wherein said clear outer layer comprises an extruded film of said composition having a thickness of about 0.5 to about 3.0 mils.

6. A sheet material according to Claim 1, further comprising an extensible mask layer (12) overlying said clear outer layer and releasably affixed thereto.

7. A sheet material according to Claim 6, wherein said extensible mask layer is selected from the group consisting of oriented polypropylene, polypropylene, polyethylene, polyurethane PETG copolyester and mixtures thereof.

8. A sheet material according to Claim 1, further comprising a thermoformable backing layer (22) overlying said second surface of said base layer.

9. A sheet material according to Claim 8, wherein said thermoformable backing layer is selected from the group consisting of thermoplastic olefin, acrylonitrile-butadiene-styrene terpolymer, polypropylene nylon, PETG copolyester and mixtures thereof.

10. A sheet material according to Claim 8, further comprising an adhesive layer (20) affixing said base layer to said thermoformable backing layer.

11. A sheet material according to Claim 10, wherein said adhesive layer is selected from the group consisting of urethane adhesives, acrylic pressure sensitive adhesives, acrylic pressure sensitive adhesives with cross linkers and mixtures thereof.

12. A flexible, weatherable decorative sheet material useful in lieu of painting for forming the exterior surface of automobile body parts, comprising:
a thermoformable base layer (18) having a first surface and a second surface and comprising an extruded pigmented opaque flexibilized polyalkyl methacrylate film, said base layer having a thickness of from 1 to 6 mils and a predetermined overall uniform color;
a color adjustment layer (16) overlying said first surface of said base layer and comprising a printing ink composition containing at least one component selected from the group consisting of pigments, dyes, flakes and mixtures thereof, said color adjustment layer having a thickness of from 0.1 to 1 mils and being of such a transparency and tint as to alter the natural color appearance of said base layer to achieve a desired match to a predetermined automotive color standard; and
a substantially transparent clear outer layer (14) overlying said first surface of said base layer, said clear outer layer comprising a film formed of a composition selected from the group consisting of urethane polymers, acrylic polymers, fluoropolymers, and alloys of a fluoropolymer and an acrylic polymer.

13. A sheet material according to Claim 12, which exhibits a distinctness-of-image (DOI) of at least 65.

14. A sheet material according to Claim 12, further comprising a thermoformable backing layer (22) overlying said second surface of said base layer and adhered thereto, said thermoformable backing layer being selected from the group consisting of thermoplastic olefin, acrylonitrile-butadiene-styrene terpolymer, polypropylene, nylon, PETG copolyester and mixtures thereof.

15. A sheet material according to Claim 12, further comprising an extensible mask layer (12) overlying said clear outer layer (14) and releasably affixed thereto.

16. A sheet material according to Claim 15, wherein said extensible mask layer is selected from the group consisting of oriented polypropylene, polypropylene, polyethylene, polyurethane, PETG copolyester and mixtures thereof.

17. A sheet material according to Claim 12, wherein said color adjustment layer comprises a print design.

18. A composite shaped structure (28) having a decorative outer finish and useful as an exterior automobile body part, comprising:
a molded polymer substrate (32);
a base layer (18) having a first surface and a second surface and comprising an extruded pigmented flexibilized polyalkyl methacrylate film, said second surface being bonded to said polymer substrate; and
a substantially transparent clear outer layer (14) overlying said first surface of said base layer, said clear outer layer comprising a film formed of a composition selected from the group consisting of urethane polymers, acrylic polymers, fluoropolymers, and alloys of a fluoropolymer and an acrylic polymer.

19. A structure according to Claim 18, further comprising a color adjustment layer (16) between said first surface of said base coat layer and said clear coat layer.

20. A structure according to Claim 18, wherein said polymer substrate (32) is selected from the group consisting of low pressure molding compound and acrylonitrile-butadiene-styrene terpolymer.

21. A composite shaped structure (28) having a decorative outer finish and useful as an exterior automobile body part, comprising:
a molded polymer substrate (32);
a thermoformable backing layer (22) overlying said polymer substrate and adhered thereto;
a base layer (18) having a first surface and a second surface and comprising an extruded pigmented flexibilized polyalkyl methacrylate film, said second surface being bonded to said thermoformable backing layer; and
a substantially transparent clear outer layer (14) overlying said first surface of said base layer, said clear outer layer comprising a film formed of a composition selected from the group consisting of urethane polymers, acrylic polymers, fluoropolymers, and alloys of a fluoropolymer and an acrylic polymer.

22. A structure according to Claim 21, wherein said thermoformable backing layer is selected from the group consisting of thermoplastic olefin, polypropylene, nylon, PETG copolyester, acrylonitrile-butadiene-styrene terpolymer and mixtures thereof.

23. A structure according to Claim 21, further comprising an adhesive layer (20) adhering said base layer to said thermoformable backing layer.

24. A structure according to Claim 23, wherein said adhesive layer is selected from the group consisting of urethane adhesives, acrylic pressure sensitive adhesives, acrylic pressure sensitive adhesives with cross linkers and mixtures thereof.

25. A structure according to Claim 21, wherein said polymer substrate is selected from the group consisting of polyvinyl chloride, polycarbonate polystyrene, acrylonitrile-butadiene-styrene terpolymer, polyethylene, polypropylene, thermoplastic olefin, styrene/polyphenylene oxide, acrylonitrile-butadiene-styrene/polycarbonate, polybutylene terephthalate, polybutylene terephthalate/polycarbonate, PETG copolyester, nylon and RIM urethanes.

26. A method of making a flexible, weatherable decorative sheet material useful in lieu of painting for forming the exterior surface of automobile body parts, comprising:
providing a base layer (18) having a first surface and a second surface and comprising an extruded pigmented flexibilized polyalkyl methacrylate film; and
forming on said first surface of said base layer a substantially transparent clear outer layer (14) comprising a film formed of a composition selected from the group consisting of urethane polymers, acrylic polymers, fluoropolymers, and alloys of a fluoropolymer and an acrylic polymer.

27. A method according to Claim 26, further comprising the step of laminating an extensible mask layer (12) to the exposed surface of the clear outer layer.

28. A method according to Claim 26, wherein said forming step comprises extruding a thin film of the composition onto the base layer to form the clear outer layer.

29. A method according to Claim 26, further comprising the step of applying a thermoformable backing layer (22) to the second surface of the base layer.

30. A method according to Claim 29, wherein said step of applying a thermoformable backing layer comprises coating an adhesive (20) onto the second surface of the base layer (18) and laminating a thermoformable backing layer (22) to the adhesive-coated surface of the base layer (18).

31. A method according to Claim 29, wherein said step of applying a thermoformable backing layer comprises extruding a thermoformable backing layer onto the second surface of the base layer.

32. A method according to Claim 26, further comprising the step of applying a color adjustment layer (16) to the first surface of the base layer prior to said step of forming a substantially transparent clear outer layer.

33. A method according to Claim 32 wherein said step of applying a color adjustment layer comprises printing an ink composition containing one or more components selected from the group consisting of pigments, dyes and flakes.

34. A method according to Claim 32, wherein said step of applying a color adjustment layer comprises printing a print design.

35. A method according to Claim 34, wherein said step of printing a design comprises using a printing technique selected from the group consisting of gravure, rotary screen, flat bed step-and-repeat screen, ink jet and flexographic techniques.

36. A method of making a flexible, weatherable decorative sheet material useful in lieu of painting for forming the exterior surface of automobile body parts, comprising:
providing a thermoformable base layer (18) having a first surface and a second surface and comprising an extruded pigmented opaque flexibilized polyalkyl methacrylate film, said base layer having a thickness of from 1 to 6 mils and a predetermined overall uniform color;
printing onto said first surface of said base layer a color adjustment layer (16) comprising a printing ink composition containing at least one component selected from the group consisting of pigments, dyes, flakes and mixtures thereof, said color adjustment layer having a thickness of from 0.1 to 1 mils and being of such a transparency and tint as to alter the natural color appearance of said base layer to achieve a desired match to a predetermined automotive color standard; and
forming over said first surface of said base layer and said color adjustment layer, a substantially transparent clear outer layer (14) overlying said first surface of said base layer, said clear outer layer comprising a film formed of a composition selected from the group consisting of urethane polymers, acrylic polymers, fluoropolymers, and alloys of a fluoropolymer and an acrylic polymer.

37. A method according to Claim 36, wherein said step of printing a color adjustment layer comprises printing onto the first surface of the base layer using printing techniques selected from the group consisting of gravure, rotary screen, flat bed step-and-repeat screen, ink jet and flexographic techniques.

38. A method according to Claim 36, further comprising the step of coating an adhesive (20) onto the second surface of the base layer (18) and laminating a thermoformable backing layer (22) to the adhesive-coated surface of the base layer (18).

39. A method according to Claim 36, further comprising the step of extruding a thermoformable backing layer (32) onto the second surface of the base layer (18).
